# EUROPÄISCHE PATENTSCHRIFT

(11) **EP 2 511 084 B1**
(45) Veröffentlichungstag und Bekanntmachung des Hinweises auf die Patenterteilung: **12.11.2014**
(21) Anmeldenummer: 11189092.7
(22) Anmeldetag: 15.11.2011
(51) Int. Cl.: B29C 70/86, B29L 31/24, B29C 53/58, B29C 53/76, B62D 27/02, F16B 7/00, B29D 23/00

(54) **Knotenelement aus faserverstärktem Kunststoff sowie Herstellungsverfahren und Verwendung dafür**
Fibre-reinforced plastic node element and method for producing and using same
Elément de noeud en matière plastique renforcée de fibres et procédé de fabrication et d'utilisation associé

(30) Priorität: 14.04.2011 US 475370 P
(43) Veröffentlichungstag der Anmeldung: 17.10.2012
(73) Patentinhaber: Magna Steyr Fahrzeugtechnik AG & Co KG, 8041 Graz (AT)
(72) Erfinder: Auer, Thomas, 9363 Metnitz (AT); Dietz, Wolfgang, 8081 Pirching (AT); Krammer, Christoph, 8530 Deutschlandsberg (AT); Pretzler, Andrea, 8611 St.Katharein/Lmg (AT)
(74) Vertreter: Rausch, Gabriele

(56) Entgegenhaltungen:
- DE-C1- 4 423 642
- NEISE E: "Industrierobotereinsatz beim Wickelverfahren", ZWF ZEITSCHRIFT FÃ 1/4 R WIRTSCHAFTLICHE FERTIGUNG,, Bd. 81, Nr. 6, 1. Juni 1986 (1986-06-01), Seiten 302-306, XP001353309,
- SANJEEV SEEREERAM ET AL: "AN ALL-GEODESIC ALGORITHM FOR FILAMENT WINDING OF A T-SHAPED FORM", IEEE TRANSACTIONS ON INDUSTRIAL ELECTRONICS, IEEE SERVICE CENTER, PISCATAWAY, NJ, USA, Bd. 38, Nr. 6, 1. Dezember 1991 (1991-12-01), Seiten 484-490, XP000275838, ISSN: 0278-0046, DOI: 10.1109/41.107105

## Beschreibung

### TECHNISCHES GEBIET

Die Erfindung betrifft ein Knotenelement aus faserverstärktem Kunststoff mit wenigstens drei rohrförmigen und/oder profilförmigen Anschlussbereichen. Die Erfindung betrifft weiterhin ein Verfahren zur Herstellung eines Knotenelements aus faserverstärktem Kunststoff mit wenigstens drei rohrförmigen und/oder profilförmigen Anschlussbereichen. Schließlich betrifft die Erfindung eine Verwendung eines solchen Knotenelements.

### STAND DER TECHNIK

Knotenelemente der genannten Art sind prinzipiell bekannt und werden beispielsweise im Rahmenbau eingesetzt. Beispielsweise offenbart die DE 44 23 642 C 1 dazu einen Tragrahmen in Fachwerkbauweise, insbesondere für ein Kraftfahrzeug, welcher aus separat vorgefertigten Rahmenprofilteilen und diese formsteif miteinander verbindenden Knotenstellen aus Faserverbundwerkstoff besteht. Die Knotenstellen sind jeweils aus mechanisiert vorgefertigten Faser-Vorformlingen mit einer dreidimensional durchlaufenden Faserstruktur und Aufnahmetaschen für die zugehörigen Rahmenprofilteile hergestellt. Die Faservorformlinge sind jeweils einzeln mit in die Aufnahmetaschen eingesetzten Rahmenprofilteilen in einem den Knotenbereich umschließenden und die Rahmenprofilteile lagegenau fixierenden Formwerkzeug zu einer integralen Faserverbund-Knotenstruktur verdichtet und konsolidiert. Nachteilig an der bekannten Knotenstruktur ist, dass deren Herstellung relativ aufwändig ist und auch deren Steifigkeit relativ niedrig ist.

### OFFENBARUNG DER ERFINDUNG

Aufgabe der Erfindung ist es daher, ein verbessertes Knotenelement, ein verbessertes Herstellungsverfahren sowie eine vorteilhafte Verwendung dafür anzugeben. Insbesondere soll eine Möglichkeit für die rationelle Herstellung eines vergleichsweise steifen Knotenelements geschaffen werden.

Die Aufgabe der Erfindung wird durch ein Knotenelement der eingangs genannten Art gelöst, umfassend zumindest ein V-förmiges oder U-förmiges, starres Wandelement, welches zwischen zwei Anschlussbereichen angeordnet und mit dem faserverstärkten Kunststoff verbunden ist.

Die Aufgabe der Erfindung wird weiterhin durch ein Verfahren zur Herstellung eines Knotenelements aus faserverstärktem Kunststoff mit wenigstens drei rohrförmigen und/oder profilförmigen Anschlussbereichen gelöst, umfassend die Schritte:
a) Anordnen eines V-förmigen oder U-förmigen Wandelements auf einem Positivkern,
b) Umwickeln der entstandenen Anordnung mit Fasern und
c) Aushärten des Knotenelements nach Einbringen beziehungsweise Aufbringen eines vernetzenden Kunststoffs.

Durch die Erfindung werden die Nachteile des eingangs genannten Standes der Technik überwunden, denn durch das V-förmige oder U-förmige, starre Wandelement wird einerseits die Herstellung des Knotenelements wesentlich vereinfacht, gleichzeitig wird aber auch dessen Steifigkeit drastisch erhöht.

Unter einem "Knotenelement" ist im Rahmen der Erfindung jedes Element zu verstehen, welches die Verbindung mehrere Stäbe oder Rohre ermöglicht, wobei die Stäbe oder Rohre jeweils an ihren Enden verbunden werden. Insbesondere ermöglicht ein Knotenelement eine winkelsteife Verbindung der genannten Stäbe oder Rohre. Die Stäbe und Rohre können dabei an sich beliebigen Querschnitt aufweisen.

Unter einem "rohrförmigen" Anschlussbereich ist im Rahmen der Erfindung jeder Anschlussbereich mit einer Querschnittsform zu verstehen, bei welcher wenigstens ein Innenbereich durch eine geschlossene Umrandung eingeschlossen wird. Insbesondere kann die Umrandung oval oder kreisförmig sowie polygonförmig und rechteckig sein. Andere Formen als die konkret genannten sind aber uneingeschränkt möglich.

Unter einem "profilförmigen" Anschlussbereich ist im Rahmen der Erfindung jeder Anschlussbereich mit einer Querschnittsform zu verstehen, bei der kein Innenbereich existiert, welcher durch eine geschlossene Umrandung eingeschlossen ist. Insbesondere sind darunter T-Profile, L-Profile, U-Profile und I-Profile zu verstehen. Andere Formen als die konkret genannten sind aber uneingeschränkt möglich.

Der Vollständigkeit halber wird angemerkt, dass ein Anschlussbereich auch aus einer Mischform eines rohrförmigen und eines profilförmigen Anschlussbereichs bestehen kann. Beispielsweise können zwei voneinander beabstandete kreisringförmige Abschnitte durch einen Steg verbunden werden usw. Die Grenzen zwischen einem rohrförmigen und einem profilförmigen Anschlussbereich sind zudem fließend, denn ein Anschlussbereich kann auch einen geschlitzten rohrförmigen Bereich umfassen. Weiterhin wird angemerkt, dass die rohrförmigen Abschnitte oder profilförmigen Abschnitte nicht notwendigerweise konstante Wandstärke aufweisen müssen, sondern auch eine variable Wandstärke aufweisen können.

Unter einem "V-förmigen oder U-förmigen" Wandelement sind im Rahmen der Erfindung Wandelemente zu verstehen, welche in ihrer Längserstreckung V-förmig oder U-förmig sind. Insbesondere sind darunter auch solche Wandelemente zu verstehen, welche ein "V" oder "U" nachbilden, insbesondere auch V-Formen mit mehreren Knicken, U-Formen mit S-förmigen und geraden Abschnitten sowie Mischformen aus einem "U" und einem "V". Ein Wandelement kann einen beliebigen Querschnitt aufweisen, insbesondere aber einen, welcher an den Querschnitt der oben genannten Stäbe oder Rohre angepasst ist, sodass die Innenform des Anschlussbereichs der Außenform der Stäbe oder Rohre entspricht.

Vorteilhafte Ausgestaltungen und Weiterbildungen der Erfindung ergeben sich nun aus den Unteransprüchen sowie aus der Beschreibung in Zusammenschau mit den Figuren.

Vorteilhaft ist es, wenn das zumindest eine Wandelement einen Teil der Innenwand des Knotenelements bildet. Auf diese Weise wird die Herstellung des Knotenelements deutlich vereinfacht, da das Wandelement direkt auf dem Positivkern angeordnet werden kann.

Besonders vorteilhaft ist es, wenn der faserverstärkte Kunststoff einen dreieckförmigen Deckelbereich und/oder Bodenbereichs des V-förmigen oder U-förmigen Wandelements bildet. Auf diese Weise kann einerseits die Steifigkeit des Knotenelements wesentlich erhöht, andererseits aber auch die Herstellung desselben deutlich vereinfacht werden, da die Fasern nicht über die einzelnen Schenkel des Knotenelements, sondern über zwei Schenkel hinweg gewickelt werden können.

Besonders vorteilhaft ist es weiterhin, wenn in dem V-förmigen beziehungsweise U-förmigen Ausschnitt des Wandelements ein geschäumter Kunststoffkörper angeordnet ist. Auf diese Weise kann die Steifigkeit des Knotenelements noch weiter gesteigert werden. Insbesondere wird die Winkelsteifigkeit der an den Ausschnitt grenzenden Schenkel zueinander verbessert. Auch ein Ausbeulen des zuvor genannten dreieckförmigen Deckelbereichs und/oder Bodenbereichs kann wirkungsvoll vermieden werden.

Besonders vorteilhaft ist es zudem, wenn das Wandelement in einem Kontaktbereich zum faserverstärkten Kunststoff eine kammartige beziehungsweise zinnen-artige Struktur aufweist. Auf diese Weise wird verhindert, dass die Fasern auf dem Positivkern verrutschen, bevor das Knotenelement ausgehärtet ist wodurch eine reproduzierbare Qualität besser erreicht werden kann. Vorzugsweise entspricht die Höhe der Zinken beziehungsweise Zinnen der Wandstärke des faserverstärkten Kunststoffs, sodass die Zinken/Zinnen nicht aus dem fertigen Knotenelement herausragen.

Eine günstige Ausgestaltung des Knotenelements umfasst drei Anschlussbereiche und ein Wandelement, da das Umwickeln der Positivform mit Fasern dann sehr leicht erfolgen kann, indem beispielsweise die beiden an das Wandelement angrenzenden Schenkel des Knotenelements gemeinsam mit Fasern umwickelt werden.

Eine weitere günstige Ausgestaltung des Knotenelements umfasst vier Anschlussbereiche und zwei einander gegenüber liegende Wandelemente, da das Umwickeln der Positivform mit Fasern dann sehr leicht erfolgen kann, indem beispielsweise die an die Wandelemente angrenzenden Schenkel des Knotenelements gemeinsam mit Fasern umwickelt werden.

Günstig ist es, wenn das Wandelement aus Metall, Holz oder bereits ausgehärtetem Kunststoff besteht. Auf diese Weise können die Eigenschaften des Wandelements gut an ein Anforderungsprofil angepasst werden.

Günstig ist es weiterhin, wenn der faserverstärkte Kunststoff Glasfasern, Kevlarfasern, Aramidfasern, Carbonfasern, Pflanzenfasern, Gesteinsfasern oder Gemische derselben enthält. Somit können die mechanischen Eigenschaften des fertigen Knotenelements in weiten Grenzen gesteuert werden.

Günstig ist es zudem, wenn der faserverstärkte Kunststoff Faserstränge, Fasergewebe, Fasergeflechte, Fasergestricke und/oder Faservliese enthält. Auf diese Weise können die mechanischen Eigenschaften des fertigen Knotenelements in verschiedenen Richtungen gesteuert werden. Das Herstellen einer geschlossenen Fläche ist insbesondere mit Geweben, Geflechten, Gestricken und/oder Vliesen leichter als mit Fasersträngen. Insbesondere ist es auch möglich, eigens für das Knotenelement hergestellte Gewebe, Geflechte, Gestricke und/oder Vliese zu verwenden.

Günstig ist es, wenn Schritt c) in einer Negativform erfolgt. Auf diese Weise kann einerseits die Außenform des Knotenelements festgelegt andererseits auch der faserverstärkte Kunststoff verdichtet werden.

Vorteilhaft ist es, wenn der Positivkern aus je einem Formteil je Anschlussbereich ausgeführt wird, welche nach dem Aushärten des Knotenelements entlang ihrer Längsachse aus den Anschlussbereichen herausgezogen werden. Auf diese Weise kann der Positivkern leicht aus dem fertigen Knotenelement entfernt und damit auch wiederverwendet werden. Alternativ ist aber natürlich auch vorstellbar, dass der Positivkern ausgewaschen wird, wodurch es insbesondere auch möglich ist, einteilige Positivkerne zu verwenden.

Günstig ist es, wenn der Positivkern aufblasbar ist. Diese Variante bietet den Vorteil, dass der Positivkern wiederverwendet werden kann.

Besonders vorteilhaft ist es, wenn für wenigstens einen Anschlussbereich anstelle des Positivkerns ein im Knotenelement verbleibender Stab oder ein darin verbleibendes Rohr vorgesehen wird. Auf diese Weise wird das Knotenelement gleich nach dem Aushärten dauerhaft mit dem genannten Stab beziehungsweise dem genannten Rohr verbunden. Gesonderte Maßnahmen zur Befestigung des Stabes oder Rohres in dem Anschlussbereich des Knotenelements können daher unterbleiben.

Besonders vorteilhaft ist es in diesem Zusammenhang, wenn das Wandelement in Schritt a) formschlüssig mit dem genannten Stab beziehungsweise dem genannten Rohr verbunden wird. Auf diese Weise kann die Herstellung des Knotenelements erleichtert beziehungsweise auch die Verbindung zwischen dem Stab/Rohr und dem Knotenelement verbessert werden. Beispielsweise kann die formschlüssige Verbindung mit Hilfe von Zapfen, Vertiefungen, Stiften und/oder Nägeln hergestellt werden.

Günstig ist es, wenn die Einbringung des vernetzenden Kunststoffs durch Tränken der Fasern mit einem flüssigen Kunststoff erfolgt. Das Einbringen des vernetzenden Kunststoffs kann durch Tränken der auf den Positivkern aufgebrachten Fasern mit einem flüssigen Kunststoff (z.B. Epoxidharz oder Polyesterharz) erfolgen, beispielsweise durch Aufsprühen, Aufwalzen oder Bestreichen. Alternativ oder zusätzlich kann der flüssige Kunststoff auch in eine geschlossene Negativform eingespritzt werden.

Günstig ist es weiterhin, wenn das Knotenelement zum Aushärten erhitzt wird. Einerseits wird damit die Aushärtung beschleunigt, andererseits können die mechanischen Eigenschaften des fertigen Knotenelements insbesondere bei Einsatz von Epoxidharz oder Polyesterharz durch das sogenannte "Tempern" beeinflusst werden.

Vorteilhaft ist es, wenn die Einbringung des vernetzenden Kunststoffs in Schritt b) durch Verwendung eines thermoplastische Fasern enthaltenden Fasergemisches und das Aushärten in Schritt c) durch Erhitzen desselben erfolgt. Auf diese Weise kann das Einbringen eines flüssigen Kunststoffes vermieden werden, wodurch die Herstellung des Kunststoffbauteils gänzlich trocken erfolgen kann.

In einer vorteilhaften Variante der Erfindung wird das Knotenelement zur Verbindung mehrerer Stäbe und/oder Rohre im Rahmenbau verwendet, insbesondere wegen seiner hohen Steifigkeit. Weil das Knotenelement zudem auch leicht und in der Regel rostbeständig ist, erfüllt es zudem auch die hohen Anforderungen im Fahrzeugbau.

In einer weiteren vorteilhaften Variante der Erfindung wird das Knotenelement schließlich zur Verbindung mehrerer Rohre in einem Fluid-Leitungssystem verwendet, aus den bereits zuvor genannten Gründen und weil das Knotenelement trotz seiner hohen Steifigkeit hohl ausgeführt werden kann.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Figur 1: eine erste Ausführungsform eines Knotenelements mit einem V-förmigen Wandelement;
- Figur 2: eine zweite Ausführungsform eines Knotenelements, bei dem der faserverstärkte Kunststoff über den Deckelbereich und den Bodenbereich des V-förmigen Wandelements geführt ist;
- Figur 3: wie Fig. 2 nur mit zusätzlichem, geschäumten Kunststoffkörper im V-förmigen Ausschnitt des Wandelements;
- Figur 4: einen Positivkern mit einem daran angeordneten Wandelement;
- Figur 5: wie Fig. 4 nur mit einem in einem Anschlussbereich angeordneten Stab;
- Figur 6: ein Knotenelement mit vier Anschlussbereichen und zwei Wandelementen;
- Figur 7: ein Knotenelement mit sechs Anschlussbereichen in unterschiedlichen Ebenen und
- Figur 8: ein Knotenelement mit U-förmigem Wandelement.

### DETAILIERTE BESCHREIBUNG DER ERFINDUNG

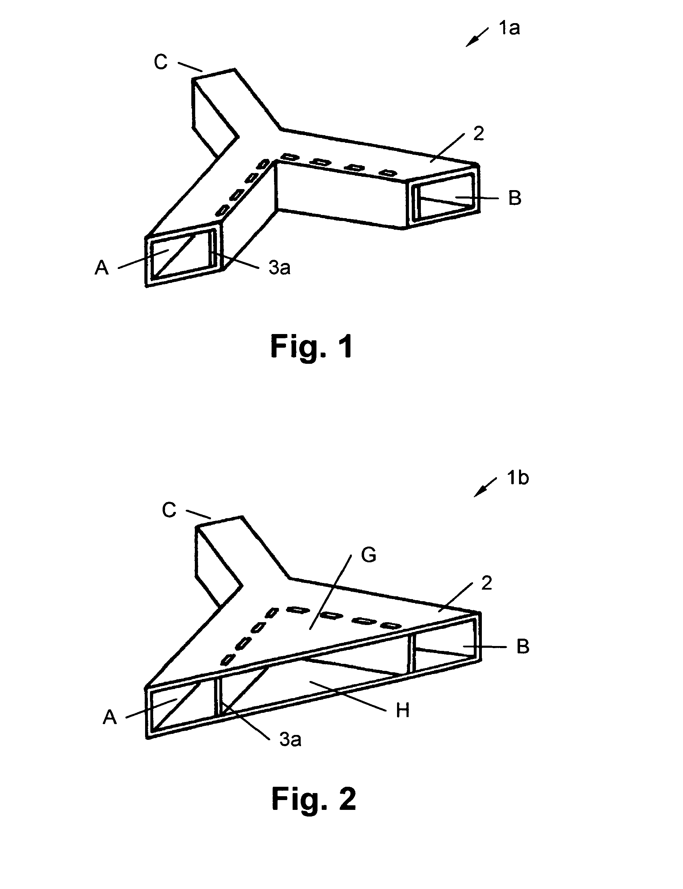

Fig. 1 zeigt eine erste Ausführungsform eines Knotenelements 1a aus faserverstärktem Kunststoff 2 mit drei rohrförmigen Anschlussbereichen A..C. Das Knotenelement 1a umfasst ein V-förmiges, starres Wandelement 3a, welches zwischen zwei Anschlussbereichen A und B angeordnet und mit dem faserverstärkten Kunststoff 2 verbunden ist. Dabei bildet das Wandelement 3a einen Teil der Innenwand des Knotenelements 1a. Das Wandelement 3a besteht vorzugsweise aus Metall, Holz oder bereits ausgehärtetem Kunststoff. Desweiteren enthält der faserverstärkte Kunststoff 2 vorteilhaft Glasfasern, Kevlarfasern, Aramidfasern, Carbonfasern, Pflanzenfasern, Gesteinsfasern oder Gemische derselben, welche beispielsweise in Form von Fasersträngen, Fasergeweben, Fasergeflechten, Fasergestricken und/oder Faservliesen verarbeitet werden.

Fig. 2 zeigt eine weitere Ausführungsform eines Knotenelements 1b, welches dem in Fig. 1 dargestellten Knotenelement 1a sehr ähnlich ist. Im Unterschied dazu bildet der faserverstärkte Kunststoff 2 einen dreieckförmigen Deckelbereich G und Bodenbereich H des V-förmigen Wandelements 3a. Das Knotenelement 1b ist somit besonders stabil und besonders leicht herzustellen, da die Fasern des faserverstärkten Kunststoffs 2 über die beiden Anschlussbereiche A und B hinweg gewickelt werden können.

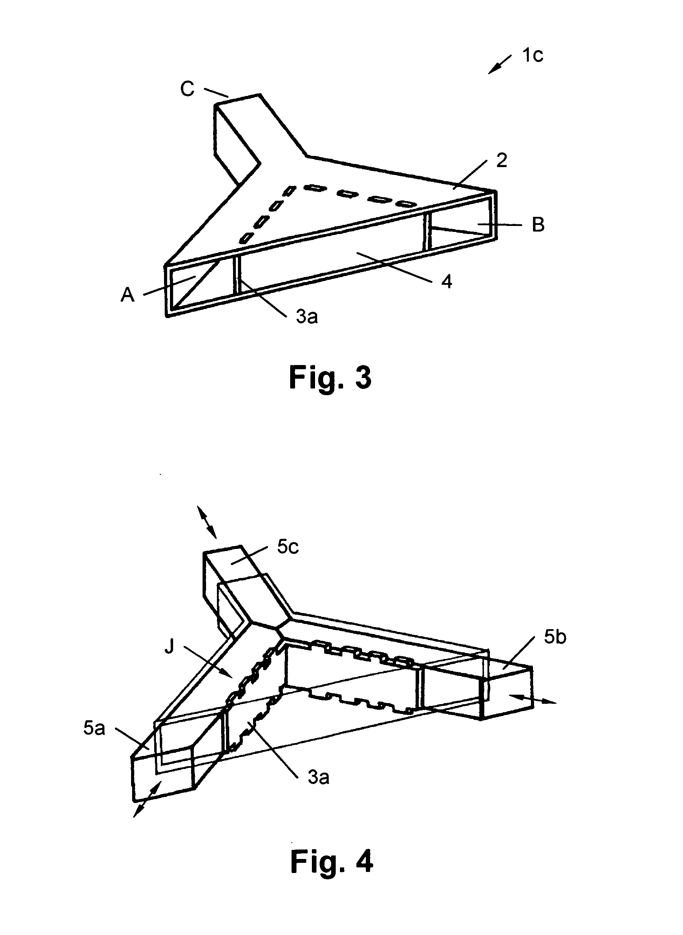

Um die Stabilität noch weiter zu erhöhen, kann in dem V-förmigen Ausschnitt des Wandelements 3a ein geschäumter Kunststoffkörper 4 angeordnet sein, so wie dies beim Knotenelement 1c in Fig. 3 dargestellt ist.

Fig. 4 zeigt nun eine Möglichkeit wie ein Knotenelement 1a..1c hergestellt werden kann. In einem ersten Schritt a) wird das V-förmige Wandelement 3a auf einem Positivkern 5a..5c angeordnet. In einem zweiten Schritt b) wird die so entstandene Anordnung mit Fasern umwickelt. Schließlich wird das Knotenelement 1a..1c nach Einbringen beziehungsweise Aufbringen eines vernetzenden Kunststoffs gehärtet. Insbesondere kann Schritt c) in einer Negativform (nicht dargestellt) erfolgen. Vorteilhaft wird das Knotenelement 1a..1c zum Aushärten auch erhitzt.

Das Einbringen des vernetzenden Kunststoffs kann durch Tränken der Fasern mit einem flüssigen Kunststoff (z.B. Epoxidharz oder Polyesterharz) erfolgen, beispielsweise nach dem Schritt b) durch Aufsprühen, Aufwalzen oder Bestreichen der in Fig. 4 dargestellten und mit Fasern umwickelten Anordnung mit dem besagten Kunststoff. Denkbar wäre in diesem Zusammenhang beispielsweise auch, dass bereits der dargestellte Positivkern 5a..5c mit Klebstoff benetzt wird.

Alternativ oder zusätzlich kann die Einbringung des flüssigen Kunststoffs auch durch Einspritzen in eine Negativform (nicht dargestellt) erfolgen. Als Kunststoffe kommen wiederum verschiedene Harze sowie beispielsweise auch Thermoplaste in Betracht.

In einer vorteilhaften Variante der Erfindung wird der vernetzende Kunststoff in Schritt b) durch Verwendung eines thermoplastische Fasern enthaltenden Fasergemisches eingebracht. Das Aushärten des Knotenelement 1a..1c erfolgt dann durch Erhitzen desselben, wodurch die thermoplastischen Fasern schmelzen und die temperaturstabilen Fasern (z.B. Glasfasern, Kevlarfasern, Aramidfasern, Carbonfasern, Pflanzenfasern oder deren Gemische) vernetzen.

Im vorliegenden Beispiel ist der Positivkern aus je einem Formteil 5a..5c je Anschlussbereich A..C ausgeführt. Diese Formteile 5a..5c sind verschiebbar gelagert (symbolisiert mit Doppelpfeilen) und werden nach dem Aushärten des Knotenelements 1a..1c entlang ihrer Längsachse aus den Anschlussbereichen A..C herausgezogen. Der besseren Vorstellbarkeit halber sind die Umrisse des fertigen Knotenelements 1a..1c mit dünnen Linien dargestellt. Alternativ oder zusätzlich kann der Positivkern 5a..5c aufblasbar ausgeführt sein. Eine Aufteilung des Positivkerns 5a..5c ist in diesem Fall nicht unbedingt erforderlich, da der aufblasbare Positivkern durch eine der Anschlussbereiche A..C herausgezogen werden kann. Denkbar wäre auch, dass der Positivkern einen gesonderten Zentralbereich aufweist, welcher nach dem Aushärten des faserverstärkten Kunststoffs 2 im Knotenelement 1a..1c verbleiben kann. Die Positivkerne 5a..5c können dann demensprechend kürzer ausgeführt werden. Vorteilhaft wird der Zentralbereich des so erhaltenen Knotenelements 1a..1c stabiler.

In der Fig. 4 ist auch gut erkennbar, dass das Wandelement 3a in einem Kontaktbereich zum faserverstärkten Kunststoff 2 eine kammartige beziehungsweise zinnen-artige Struktur J aufweist, sodass die Fasern nicht so leicht verrutschen und die in der Fig. 4 dargestellte Anordnung vor und bei Einbringung eines flüssigen Kunststoffs besser ihre Form behält. Vorzugsweise entspricht die Höhe der Zinken beziehungsweise Zinnen der Wandstärke des faserverstärkten Kunststoffs, sodass die Zinken/Zinnen nicht aus dem fertigen Knotenelement 1a..1c herausragen.

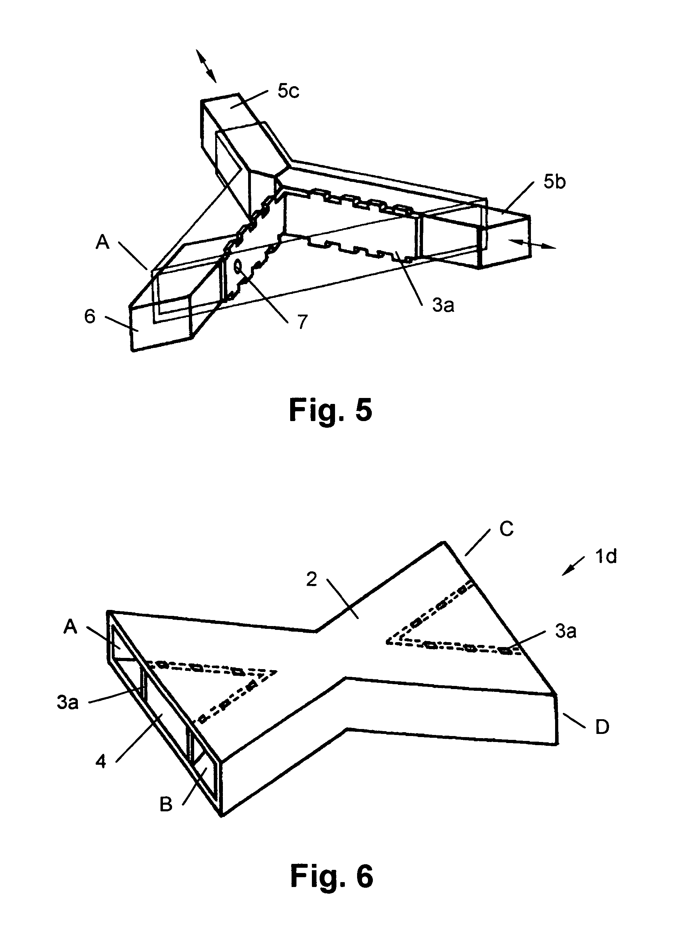

Fig. 5 zeigt ein weiteres Verfahren zur Herstellung eines Knotenelements 1a..1c. Dabei wird für den Anschlussbereich A anstelle des Positivkerns 5a ein im Knotenelement 1a..1c verbleibender Stab 6 (hier verkürzt dargestellt) vorgesehen. Alternativ kann auch ein darin verbleibendes Rohr vorgesehen sein. Vorteilhaft ist das Knotenelement 1a..1c nach dem Aushärten gleich dauerhaft mit dem Stab 6 verbunden. Selbstverständlich können auch mehrere oder sogar alle Anschlussbereiche A..C mit solchen Stäben beziehungsweise Rohren ausgestattet sein. Um die Herstellung des Knotenelements 1a..1c zu erleichtern, beziehungsweise auch um die Verbindung zwischen dem Stab 6 und dem Knotenelement 1a..1c zu verbessern kann das Wandelement 3a in Schritt a) formschlüssig mit dem genannten Stab 6 beziehungsweise dem genannten Rohr verbunden werden, insbesondere wie hier dargestellt mit einem Stift 7. Denkbar wäre aber auch eine formschlüssige Verbindung mit Hilfe von Zapfen, Vertiefungen und/oder Nägeln.

Fig. 6 zeigt eine weitere Variante eines Knotenelements 1d mit vier Anschlussbereichen A..D und zwei einander gegenüber liegenden Wandelementen 3a. Ansonsten ist das Knotenelement 1d analog zu dem Knotenelement 1c aus der Fig. 4 aufgebaut und kann auch in der gleiche Weise hergestellt werden.

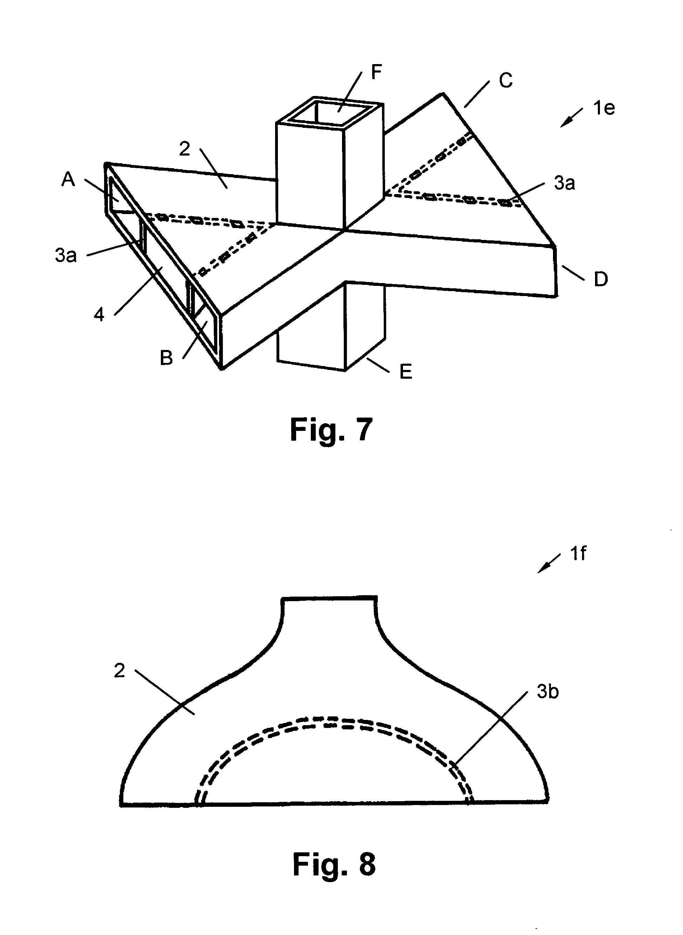

Fig. 7 zeigt eine Variante eines Knotenelements 1e, welches ähnlich dem Knotenelement 1d aus der Fig. 6 ist. Im Unterschied dazu weist das Knotenelement 1e aber zwei zusätzliche Anschlussbereiche E und F auf. Die Anschlussbereiche A..F müssen also nicht in einer Ebene liegen.

Fig. 8 zeigt schließlich eine Variante eines Knotenelements 1f mit einem U-förmigen Wandelement 3b in Draufsicht. Neben den dargestellten Wandelementen 3a und 3b sind auch weitere Formen unter einem "V-förmigen oder U-förmigen" Wandelement zu verstehen welche ein "V" oder "U" nachbilden, insbesondere auch V-Formen mit mehreren Knicken, U-Formen mit S-förmigen und geraden Abschnitten sowie Mischformen aus einem "U" und einem "V".

Die in den Figuren dargestellten Wandelemente 3a und 3b weisen einen rechteckförmigen Querschnitt auf, welcher von Vorteil ist, wenn rechteckförmige Rohren oder Stäben verbunden werden sollen. Selbstverständlich können die Wandelemente 3a und 3b auch einen anderen Querschnitt aufweisen, beispielsweise einen halbkreisförmigen Querschnitt, damit Rohre oder Stäbe mit kreisförmigem Querschnitt verbunden werden können. Zudem können die Wandelemente 3a und 3b auch einen profilförmigen Querschnitt (beispielsweise ein U-Profil, ein L-Profil, ein I-Profil oder ein T-Profil aufweisend) sowie einen gemischt rohrförmig/profilförmigen Querschnitt umfassen.

Die dargestellten Knotenelemente 1a..1f können vorteilhaft zur Verbindung mehrerer Stäbe und/oder Rohre im Rahmenbau, insbesondere im Kraftfahrzeugbau, verwendet werden. Denkbar wäre auch, dass die Knotenelemente 1a..1f zur Verbindung mehrerer Rohre in einem Fluid-Leitungssystem verwendet werden.

Abschließend wird festgehalten, dass die Bestandteile der Figuren ggf. nicht maßstabsgetreu dargestellt sind und dass die einzelnen in den Figuren dargestellten Varianten auch den Gegenstand einer unabhängigen Erfindung bilden können. Lageangaben wie "rechts", "links", "oben", "unten" und dergleichen beziehen sich auf die dargestellte Lage des jeweiligen Bauteils und sind bei Änderung der genannten Lage gedanklich entsprechend anzupassen. Ferner wird darauf hingewiesen, dass die Formen des dargestellten Knotenelemente 1a..1f natürlich rein beispielhaft ist und nicht dazu herangezogen werden darf, den Schutzbereich der Patentansprüche zu limitieren. Der Fachmann kann die hier offenbarte Lehre leicht auf jegliche Bauteilform anwenden.

## Patentansprüche

1. Knotenelement (1a..1f) aus faserverstärktem Kunststoff (2) mit wenigstens drei rohrförmigen und/oder profilförmigen Anschlussbereichen (A..F),
**gekennzeichnet durch**
zumindest ein V-förmiges oder U-förmiges, starres Wandelement (3a, 3b), welches zwischen zwei Anschlussbereichen (A..B, C..D) angeordnet und mit dem faserverstärkten Kunststoff (2) verbunden ist.

2. Knotenelement (1a..1f) nach Anspruch 1, **dadurch gekennzeichnet, dass** das zumindest eine Wandelement (3a, 3b) einen Teil der Innenwand des Knotenelements (1a..1f) bildet.

3. Knotenelement (1a..1f) nach Anspruch 1 oder 2, **dadurch gekennzeichnet, dass** der faserverstärkte Kunststoff (2) einen dreieckförmigen Deckelbereich (G) und/oder Bodenbereichs (H) des V-förmigen oder U-förmigen Wandelements (3a, 3b) bildet.

4. Knotenelement (1a..1f) nach einem der Ansprüche 1 bis 3, **dadurch gekennzeichnet, dass** in dem V-förmigen beziehungsweise U-förmigen Ausschnitt des Wandelements (3a, 3b) ein geschäumter Kunststoffkörper (4) angeordnet ist.

5. Knotenelement (1a..1f) nach einem der Ansprüche 1 bis 4, **dadurch gekennzeichnet, dass** das Wandelement (3a, 3b) in einem Kontaktbereich zum faserverstärkten Kunststoff (2) eine kammartige beziehungsweise zinnen-artige Struktur (J) aufweist.

6. Knotenelement (1a..1f) nach Anspruch 5, **dadurch gekennzeichnet, dass** die Höhe der Zinken bezichungsweise Zinnen im Wesentlichen der Wandstärke des faserverstärkten Kunststoffs (2) entspricht.

7. Knotenelement (1a..1f) nach einem der Ansprüche 1 bis 6, **gekennzeichnet durch** drei Anschlussbereiche (A..C) und ein Wandelement (3a, 3b).

8. Knotenelement (1a..1f) nach einem der Ansprüche 1 bis 6, **gekennzeichnet durch** vier Anschlussbereiche (A..D) und zwei einander gegenüber liegende Wandelemente (3a, 3b).

9. Knotenelement (1a..1f) nach einem der Ansprüche 1 bis 8, **dadurch gekennzeichnet, dass** das Wandelement (3a, 3b) aus Metall, Holz oder bereits ausgehärtetem Kunststoff besteht.

10. Knotenelement (1a..1f) nach einem der Ansprüche 1 bis 9, **dadurch gekennzeichnet, dass** der faserverstärkte Kunststoff (2) Glasfasern, Kevlarfasern, Aramidfasern, Carbonfasern, Pflanzenfasern, Gesteinsfasern oder Gemische derselben enthält.

11. Knotenelement (1a..1f) nach einem der Ansprüche 1 bis 10, **dadurch gekennzeichnet, dass** der faserverstärkte Kunststoff (2) Faserstränge, Fasergewebe, Fasergeflechte, Fasergestricke und/oder Faservliese enthält.

12. Verfahren zur Herstellung eines Knotenelements (1a..1f) aus faserverstärktem Kunststoff (2) mit wenigstens drei rohrförmigen und/oder profilförmigen Anschlussbereichen (A..F), umfassend die Schritte:
a) Anordnen eines V-förmigen oder U-förmigen Wandelements (3a, 3b) auf einem Positivkern (5a..5c),
b) Umwickeln der entstandenen Anordnung mit Fasern und
c) Aushärten des Knotenelements (1a..1f) nach Einbringen beziehungsweise Aufbringen eines vernetzenden Kunststoffs.

13. Verfahren nach Anspruch 12, **dadurch gekennzeichnet, dass** Schritt c) in einer Negativform erfolgt.

14. Verfahren nach Anspruch 12 oder 13, **dadurch gekennzeichnet, dass** der Positivern aus je einem Formteil (5a..5c) je Anschlussbereich (A..C) ausgeführt wird, welche nach dem Aushärten des Knotenelements (1a..1f) entlang ihrer Längsachse aus den Anschlussbereichen (A..C) herausgezogen werden.

15. Verfahren nach Anspruch 12 oder 13, **dadurch gekennzeichnet, dass** der Positivkern (5a..5c) aufblasbar ist.

16. Verfahren nach einem der Ansprüche 12 bis 15, **dadurch gekennzeichnet, dass** für wenigstens einen Anschlussbereich (A..F) anstelle des Positivkerns (5a..5c) ein im Knotenelement (1a..1f) verbleibender Stab (6) oder ein darin verbleibendes Rohr vorgesehen wird.

17. Verfahren nach Anspruch 16, **dadurch gekennzeichnet, dass** das Wandelement (3a, 3b) in Schritt a) formschlüssig mit dem genannten Stab (6) beziehungsweise dem genannten Rohr verbunden wird.

18. Verfahren nach einem der Ansprüche 12 bis 17, **dadurch gekennzeichnet, dass** die Einbringung des vernetzenden Kunststoffs durch Tränken der Fasern mit einem flüssigen Kunststoff erfolgt.

19. Verfahren nach einem der Ansprüche 12 bis 18, **dadurch gekennzeichnet, dass** das Knotenelement (1a..1f) zum Aushärten erhitzt wird.

20. Verfahren nach einem der Ansprüche 12 bis 17, **dadurch gekennzeichnet, dass** die Einbringung des vernetzenden Kunststoffs in Schritt b) durch Verwendung eines thermoplastische Fasern enthaltenden Fasergemisches und das Aushärten in Schritt c) durch Erhitzen desselben erfolgt.

21. Verwendung eines Knotenelements (1a..1f) nach einem der Ansprüche 1 bis 11 zur Verbindung mehrerer Stäbe und/oder Rohre im Rahmenbau.

22. Verwendung eines Knotenelements (1a..1f) nach einem der Ansprüche 1 bis 11 zur Verbindung mehrerer Rohre in einem Fluid-Leitungssystem.

## Claims

1. Joint element (1a..1f) made of fibre-reinforced plastic (2) having at least three tubular and/or profile-shaped connection regions (A..F),
**characterized by**
at least one V-shaped or U-shaped rigid wall element (3a, 3b), which is arranged between two connection regions (A..B, C..D) and is connected to the fibre-reinforced plastic (2).

2. Joint element (1a..1f) according to Claim 1, **characterized in that** the at least one wall element (3a, 3b) forms part of the inner wall of the joint element (1a..1f).

3. Joint element (1a..1f) according to Claim 1 or 2, **characterized in that** the fibre-reinforced plastic (2) forms a triangular cover region (G) and/or base region (H) of the V-shaped or U-shaped wall element (3a, 3b).

4. Joint element (1a..1f) according to one of Claims 1 to 3, **characterized in that** a foamed plastics body (4) is arranged in the V-shaped or U-shaped section of the wall element (3a, 3b).

5. Joint element (1a..1f) according to one of Claims 1 to 4, **characterized in that** the wall element (3a, 3b) has a comb-like or crenelated structure (J) in a contact region with the fibre-reinforced plastic (2).

6. Joint element (1a..1f) according to Claim 5, **characterized in that** the height of the tines or crenelations corresponds substantially to the wall thickness of the fibre-reinforced plastic (2).

7. Joint element (1a..1f) according to one of Claims 1 to 6, **characterized by** three connection regions (A..C) and one wall element (3a, 3b).

8. Joint element (1a..1f) according to one of Claims 1 to 6, **characterized by** four connection regions (A..D) and two wall elements (3a, 3b) lying opposite one another.

9. Joint element (1a..1f) according to one of Claims 1 to 8, **characterized in that** the wall element (3a, 3b) consists of metal, wood or already cured plastic.

10. Joint element (1a..1f) according to one of Claims 1 to 9, **characterized in that** the fibre-reinforced plastic (2) contains glass fibres, Kevlar fibres, aramid fibres, carbon fibres, vegetable fibres, mineral fibres or mixtures of the same.

11. Joint element (1a..1f) according to one of Claims 1 to 10, **characterized in that** the fibre-reinforced plastic (2) contains fibrous strands, fibrous weaves, fibrous braids, fibrous knits and/or fibrous webs.

12. Process for producing a joint element (1a..1f) made of fibre-reinforced plastic (2) having at least three tubular and/or profile-shaped connection regions (A..F), comprising the following steps:
a) a V-shaped or U-shaped wall element (3a, 3b) is arranged on a positive core (5a..5c),
b) fibres are wound around the arrangement which is formed, and
c) the joint element (1a..1f) is cured following the introduction or application of a crosslinking plastic.

13. Process according to Claim 12, **characterized in that** step c) is effected in a negative mould.

14. Process according to Claim 12 or 13, **characterized in that** the positive core is made up of one moulded part (5a..5c) for each connection region (A..C), which moulded parts are pulled out of the connection regions (A..C) along the longitudinal axis thereof after the joint element (1a..1f) has been cured.

15. Process according to Claim 12 or 13, **characterized in that** the positive core (5a..5c) is inflatable.

16. Process according to one of Claims 12 to 15, **characterized in that** a bar (6) which remains in the joint element (1a..1f) or a pipe which remains therein is provided for at least one connection region (A..F) instead of the positive core (5a..5c).

17. Process according to Claim 16, **characterized in that**, in step a), the wall element (3a, 3b) is connected in a form-fitting manner to said bar (6) or said pipe.

18. Process according to one of Claims 12 to 17, **characterized in that** the crosslinking plastic is introduced by impregnating the fibres with a liquid plastic.

19. Process according to one of Claims 12 to 18, **characterized in that** the joint element (1a..1f) is heated for the purpose of curing.

20. Process according to one of Claims 12 to 17, **characterized in that** the introduction of the crosslinking plastic in step b) is effected by using a fibre mixture containing thermoplastic fibres and the curing in step c) is effected by heating the same.

21. Use of a joint element (1a..1f) according to one of Claims 1 to 11 for connecting a plurality of bars and/or pipes in frame construction.

22. Use of a joint element (1a..1f) according to one of Claims 1 to 11 for connecting a plurality of pipes in a fluid conduit system.

## Revendications

1. Elément de noeud (1a.. 1f) en matière plastique renforcée par des fibres (2) comprenant au moins trois régions de raccordement de forme tubulaire et/ou profilée (A..F),
**caractérisé par**
au moins un élément de paroi rigide en forme de V ou en forme de U (3a, 3b) qui est disposé entre deux régions de raccordement (A..B, C..D) et qui est connecté à la matière plastique renforcée par des fibres (2) .

2. Élément de noeud (1a.. 1f) selon la revendication 1, **caractérisé en ce que** l'au moins un élément de paroi (3a, 3b) forme une partie de la paroi interne de l'élément de noeud (1a.. 1f).

3. Elément de noeud (1a.. 1f) selon la revendication 1 ou 2, **caractérisé en ce que** la matière plastique renforcée par des fibres (2) forme une région de couvercle triangulaire (G) et/ou une région de fond (H) de l'élément de paroi en forme de V ou en forme de U (3a, 3b).

4. Elément de noeud (1a.. 1f) selon l'une quelconque des revendications 1 à 3, **caractérisé en ce qu'**un corps en matière plastique moussé (4) est disposé dans la portion en forme de V ou en forme de U de l'élément de paroi (3a, 3b).

5. Elément de noeud (1a.. 1f) selon l'une quelconque des revendications 1 à 4, **caractérisé en ce que** l'élément de paroi (3a, 3b) présente, dans une région de contact avec la matière plastique renforcée par des fibres (2), une structure (J) en forme de peigne ou de forme crénelée.

6. Elément de noeud (1a.. 1f) selon la revendication 5, **caractérisé en ce que** la hauteur des dents ou des créneaux correspond essentiellement à l'épaisseur de paroi de la matière plastique renforcée par des fibres (2).

7. Elément de noeud (1a.. 1f) selon l'une quelconque des revendications 1 à 6, **caractérisé par** trois régions de raccordement (A..C) et un élément de paroi (3a, 3b).

8. Elément de noeud (1a.. 1f) selon l'une quelconque des revendications 1 à 6, **caractérisé par** quatre régions de raccordement (A..D) et deux éléments de paroi opposés l'un à l'autre (3a, 3b).

9. Elément de noeud (1a.. 1f) selon l'une quelconque des revendications 1 à 8, **caractérisé en ce que** l'élément de paroi (3a, 3b) se compose de métal, de bois ou de matière plastique déjà durcie.

10. Elément de noeud (1a.. 1f) selon l'une quelconque des revendications 1 à 9, **caractérisé en ce que** la matière plastique renforcée par des fibres (2) contient des fibres de verre, des fibres de kevlar, des fibres d'aramide, des fibres de carbone, des fibres végétales, des fibres de roche et/ou des mélanges de celles-ci.

11. Elément de noeud (1a.. 1f) selon l'une quelconque des revendications 1 à 10, **caractérisé en ce que** la matière plastique renforcée par des fibres (2) contient des torons de fibres, des tissus fibreux, des treillis fibreux, des tissus à mailles fibreuses et/ou des matériaux non tissés.

12. Procédé de fabrication d'un élément de noeud (1a.. 1f) constitué de matière plastique renforcée par des fibres (2) comprenant au moins trois régions de raccordement de forme tubulaire et/ou profilée (A..F), comprenant les étapes suivantes :
a) agencement d'un élément de paroi en forme de V ou en forme de U (3a, 3b) sur un noyau positif (5a..5c),
b) enroulement de l'agencement produit avec des fibres et
c) durcissement de l'élément de noeud (1a.. 1f) après l'introduction ou l'application d'une matière plastique réticulante.

13. Procédé selon la revendication 12, **caractérisé en ce que** l'étape c) est mise en oeuvre dans un moule négatif.

14. Procédé selon la revendication 12 ou 13, **caractérisé en ce que** le noyau positif est réalisé à partir d'une pièce moulée respective (5a..5c) pour chaque région de raccordement (A..C), lesquelles sont retirées après le durcissement de l'élément de noeud (1a.. 1f) le long de leur axe longitudinal hors des régions de raccordement (A..C).

15. Procédé selon la revendication 12 ou 13, **caractérisé en ce que** le noyau positif (5a..5c) peut être gonflé.

16. Procédé selon l'une quelconque des revendications 12 à 15, **caractérisé en ce que** pour au moins une région de raccordement (A..F), au lieu du noyau positif (5a..5c), on prévoit une barre (6) subsistant dans l'élément de noeud (1a..1f) ou un tube subsistant dans celui-ci.

17. Procédé selon la revendication 16, **caractérisé en ce que** l'élément de paroi (3a, 3b) est connecté dans l'étape a) par engagement par correspondance de forme avec ladite barre (6) ou avec ledit tube.

18. Procédé selon l'une quelconque des revendications 12 à 17, **caractérisé en ce que** l'introduction de la matière plastique réticulante est réalisée en imbibant les fibres d'une matière plastique liquide.

19. Procédé selon l'une quelconque des revendications 12 à 18, **caractérisé en ce que** l'élément de noeud (1a.. 1f) est chauffé pour son durcissement.

20. Procédé selon l'une quelconque des revendications 12 à 17, **caractérisé en ce que** l'introduction de la matière plastique réticulante dans l'étape b) est mise en oeuvre par utilisation d'un mélange de fibres contenant des fibres thermoplastiques et le durcissement dans l'étape c) est mis en oeuvre par chauffage de celui-ci.

21. Utilisation d'un élément de noeud (1a.. 1f) selon l'une quelconque des revendications 1 à 11 pour la connexion de plusieurs barres et/ou tubes dans une construction de cadre.

22. Utilisation d'un élément de noeud (1a.. 1f) selon l'une quelconque des revendications 1 à 11 pour la connexion de plusieurs tubes dans un système de conduites fluidiques.
